# EUROPEAN PATENT SPECIFICATION

(11) **EP 1 287 274 B1**
(45) Date of publication and mention of the grant of the patent: **25.08.2004**
(21) Application number: 01932465.6
(22) Date of filing: 16.05.2001
(51) Int. Cl.: F16H 48/08

(54) **DIFFERENTIAL GEAR**
AUSGLEICHSGETRIEBE
ENGRENAGE DIFFERENTIEL

(30) Priority: 17.05.2000 SE 0001809
(43) Date of publication of application: 05.03.2003
(73) Proprietor: Scania CV AB (publ), 151 87 Södertälje (SE)
(72) Inventor: GÖRAS, Erik, S-169 38 Solna (SE)
(86) International application number: PCT/SE2001/001071
(87) International publication number: WO 2001/088414

(56) References cited:
- EP-A- 1 085 239
- SE-B- 459 034
- US-A- 3 593 595
- US-A- 5 647 814
- DATABASE WPI Week 9744, Derwent Publications Ltd., London, GB; AN 1997-478591/44, XP001052795 & RU 2 076 964 C (GAZ STOCK CO) 10 April 1997

## Description

The present invention relates to a differential gear of the kind indicated in the preamble to patent claim 1. Such a differential gear is for instance known from US-A-3 593 595.

### State of the art

Heavy-duty motor vehicles such as trucks usually have on the rear axle a gear unit consisting of a set of gears, preferably in the form of a differential gear, combined with a final gear. Such a differential gear generally consists of a simple type of planetary gear whose function is not only to allow the powered wheels at the ends of the wheel driveshafts to rotate at different speeds (as required when negotiating a bend) but also to make it possible for the drive power to be distributed equally to the two powered wheels.

In cases where the powered wheels are the vehicle's rear wheels, the differential gear has a differential housing which is supported for rotation relative to the shaft casings of the driveshafts ofthe rear wheels and which is provided on the outside with a gearwheel (crown wheel) driven by the propeller shaft via a pinion.

The differential housing incorporates at least two, but on heavy trucks always four, differential pinions (planet wheels) which are supported for rotation on a common differential spider and are in driving engagement with driveshaft pinions (sun wheels) fastened to the ends (which are situated inside the differential housing) of the rear axle's two wheel driveshafts.

The differential housing is generally composed of two halves to make it easy to fit the gearwheels (pinions) inside it. The outside of the differential housing is provided with a machined flange to which the annular crown wheel is applied and fastened.

As mentioned above, the differential pinions are usually carried by a common differential spider made in the form of an undivided unit. The differential spider is then usually clamped or fixed between the two halves of the differential housing, which are held together by threaded connections.

Also known is an alternative design solution (Mercedes Benz) whereby the aforesaid undivided differential spider is replaced by a differential shaft which runs diametrically across the inside of the differential housing, carries two of the differential pinions and is provided at its midpoint with a pair of recesses situated on opposite sides of the differential shaft. These two recesses accommodate the ends of a pair of differential spigots, in way perpendicularly of the differential shaft, for each of the other two differential pinions within the differential housing.

From Figure 8 of EP-A-1 085 239 being a document in accordance with Article 54(3) EPC is known
a differential gear in which a driving gearwheel, e.g. a pinion, is in driving engagement with a gearwheel, e.g. a crown wheel, arranged firmly on the outside of a differential housing containing differential pinions,
- said differential pinions are carried by spigots fastened in the differential housing and are in driving engagement with driveshaft pinions fastened to the ends of a pair of coaxial wheel driveshafts, which ends are situated inside the differential housing,
- whereby each differential pinion is carried by a separate differential spigot of its own and each spigot has an outer first end accommodated in a positionally fixed manner in the differential housing and an inner second end supported and positionally fixed at the centre of the differential housing,
- wherein said differential housing includes a housing portion which surrounds said differential pinions in an annular manner and which has radially directed accommodating apertures for fastening the outer ends of the differential spigots,
- wherein the housing portion surrounding said differential pinions has at a distance from the accommodating apertures an annular delineating surface situated in a transverse plane perpendicular to the longitudinal direction of the wheel driveshafts, and
- wherein the gearwheel which takes the form of a crown wheel has a fastening surface applied to the delineating surface,
**wherein**
- the inner ends of the differential spigots are wedge-shaped with a 90 ° leading edge angle between the leading edge surfaces of the wedge tip,
- the wedge-shaped inner ends of the spigots are closely in way of one another so that their parallel wedge tips coincide along a line parallel with the wheel driveshafts.

The aforementioned differential housing consists of three parts, two housing portions and the crown wheel.

### Object of the invention

The prime object of the present invention is to provide a differential gear whose housing is so designed that there is no need for a dividing plane in the transverse plane region where the spigot ends of the differential spider are fastened or accommodated. In other words, the object is to make it possible to fit the various constituent elements of the differential spider into the differential housing without difficulty despite there being no dividing plane in the fastening region concerned.

### Description of the invention

According to the invention, the aforesaid object is achieved by a differential gear of the kind indicated in the patent claim 1.

When the differential gear is in operation and drive power is thus being transmitted from the crown wheel to the wheel driveshafts, the differential spigots will be subject to flexural loading (bending moments and power effects) caused by forces from the differential pinions, so each differential spigot will need support both in a wall portion of the surrounding differential housing and at the centre of the differential housing.

The inner ends of the differential spigots (at the centre of the space inside the differential housing) are wedge-shaped with 90° leading edge angles between the leading edge surfaces forming the wedge tips, and the wedge-shaped inner ends of the spigots are closely in way of one another so that their parallel wedge tips coincide along a line which is coaxial or parallel with the wheel driveshafts.

The differential housing incorporates a housing portion which surrounds the differential pinions in an annular manner and which has radially oriented accommodating apertures in which the outer ends of the differential spigots are held in position by said locking when the spigots engage with and lock one another mutually at their inner ends.

The housing portion surrounding the differential pinions has at a distance from the apertures which accommodate the spigots an annular delineating surface situated in a transverse plane perpendicular to the longitudinal direction of the wheel driveshafts. The gearwheel which thus takes the form of a crown wheel has a corresponding annular fastening surface to be applied to said delineating surface of the housing portion in order to fasten the crown wheel to the housing portion, e.g. by threaded connections through these two annular surfaces abutting against one another.

In addition to the features indicated in the characterising part of patent claim 1, the differential gear according to the invention may also exhibit the features indicated in claims 2-5.

Particularly in the case of a heavy-duty truck, the differential housing preferably contains four differential pinions which are then carried by four separate differential spigots. These differential spigots are fitted in a common transverse plane to the differential housing and are mutually aligned to form a right-angled differential spider. In this case the differential spider is made up of four separate differential spigots.

The differential housing of a differential gear according to the invention may thus with advantage take the form of an undivided housing unit with no dividing plane at all in the region of the transverse plane in which the differential spigots are fitted.

To keep the differential spigots in position-fixing engagement by shape with one another at their inner ends when the differential gear is in operation and drive power is being transmitted from the crown wheel to the wheel driveshafts, it is advantageous that at their outer ends and in their respective longitudinal directions the differential spigots be supported against an annular contact surface. This force-absorbing contact surface may advantageously be provided on the gearwheel which takes the form of a crown wheel and is firmly arranged on the outside of the differential housing. This provides a kind of locking or positional fixing of the differential spigots. The result is "interception" of the axial force which arises from their cooperating 90° wedge tips and which endeavours to move the differential spigots in their longitudinal direction outwards from the centre of the differential housing. The locking or positional fixing of the differential spigots is therefore advantageously integrated in the crown wheel, which thus acts as a kind of locking socket which prevents the outer ends of the differential spigots from moving radially outwards.

The housing portion surrounding the differential pinions may advantageously have a spherically curved inside which faces the radially outward-facing rear sides of the differential pinions and which thereby provides supporting reaction surfaces to absorb the forces which urge the differential pinions radially outwards in the longitudinal direction of the differential spigots.

### Brief description of the drawings

The invention will now be illustrated and explained further with reference to an embodiment depicted in the attached drawings, which are as follows:
Fig. 1 depicts a horizontal section through a differential gear of the kind which the invention refers to;
Fig. 2 depicts in perspective a differential housing, provided with a crown wheel, for a differential gear according to the invention;
Fig. 3 depicts separately, in perspective, only the differential housing depicted in Fig. 2 with the crown wheel applied;
Fig. 4 depicts in perspective the positioning ofthe differential spider supporting the planet wheels, but without, for the sake of clarity, the surrounding differential housing;
Fig. 5 depicts on a larger scale the differential spider according to Fig. 4, but with one differential spigot omitted;
Fig. 6 depicts the same region as in Fig. 5, but with only one differential spigot in a notional functional position with its differential pinion (planet wheel) in driving engagement with a driveshaft pinion (sun wheel), with the driveshaft omitted;
Fig. 7 depicts the housing of the differential gear in the same sectional view as in Fig. 1; and
Fig. 8 depicts in diametral cross-section the differential housing according to Fig. 7 and therefore corresponds to the differential housing according to Fig. 3 viewed in diametral cross-section.

### Description of an embodiment

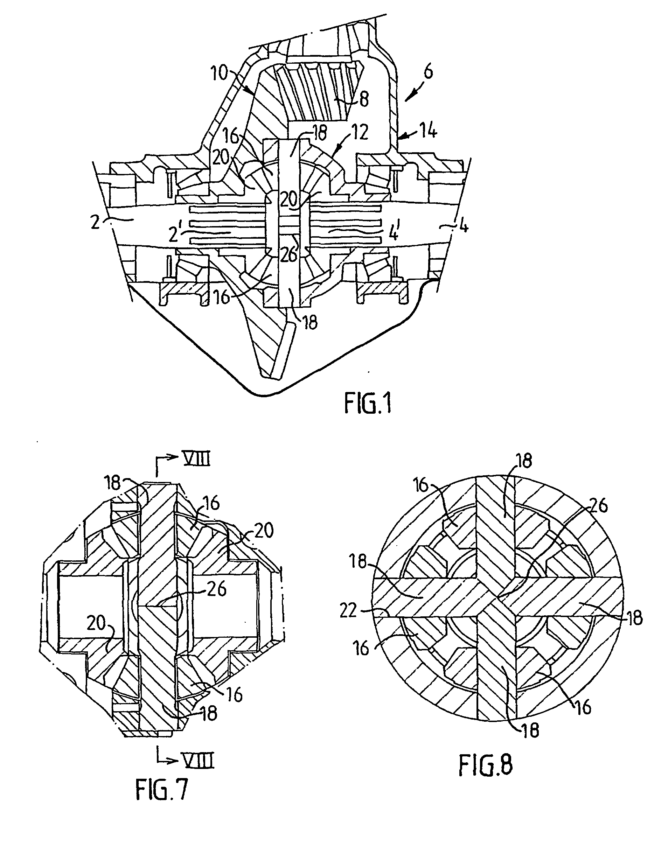

Fig. 1 depicts the central region of a rear axle for a vehicle with rear wheel drive. The rear axle, which incorporates two wheel driveshafts (halfshafts) 2, 4, is combined in a conventional manner with a rear axle gear (final gear) which includes a differential gear 6. The drive power from the vehicle's engine (not depicted) is transmitted via a propeller shaft (not depicted) and a pinion 8 associated therewith to a crown wheel 10 which is attached firmly (advantageously by threaded connections) to the outside of a differential housing 12. This differential housing is supported for rotation in a final gear casing 14 which is itself joined to shaft casings which enclose the wheel driveshafts 2, 4.

As mostly clearly indicated by Figs. 3-4, the differential housing 12 contains four differential pinions 16 carried by (see Fig. 3 in particular) differential spigots 18 fastened in the differential housing. The four differential pinions 16 are also in driving engagement with driveshaft pinions 20 which are fastened to the ends 2', 4' (see Fig. 1), situated inside the differential housing 12, of the coaxial wheel driveshafts 2, 4.

As probably indicated with the desired clarity by Figs. 2-5, the primary distinguishing feature of the invention is that each differential pinion 16 is carried by a separate differential spigot 18 of its own. Each such differential spigot 18 has an outer first end 18' accommodated in a positionally fixed manner in a radially directed fitting hole 22 in the differential housing 12, and an inner second end 18" supported and positionally fixed at the centre of the differential housing (see Figs. 3, 4 and 5 in particular).

The four differential spigots 18, which are thus fitted and situated in a common transverse plane to the differential housing 12, are mutually aligned (see Figs. 3-4 in particular) so as to form a right-angled differential spigot cross.

The mutual positional fixing of the differential spigots 18 at the centre of the differential housing is achieved by their inner ends 18" being made wedge-shaped with a 90° leading edge angle between the planar leading edge surfaces 24', 24" forming a wedge tip 26 (see Fig. 6). As clearly indicated by Figs. 3-5, the differential spigots 18 are closely in way of one another via their thus wedge-shaped inner ends 18" so that their parallel wedge tips 26 coincide along a line parallel with the centreline of the coaxial wheel driveshafts 2, 4.

As most clearly indicated by Fig. 3, the differential housing 12 takes the form of an undivided housing unit which has no dividing plane in the region of the transverse plane in which the differential spigots 18 are fitted. As particularly clearly indicated by Figs. 2-3, the differential spigots 18 are held in position-fixing engagement by shape with one another at their inner ends 18" by the fact that they bear at their outer ends 18' and in their respective longitudinal directions against an annular contact surface 28 (see Figs. 4-5) on the crown wheel 10 fastened to the outside of the differential housing 12. The internal contact surface 28 of the crown wheel 10 thus abuts, when the differential housing 12 and the crown wheel 10 are fitted together, against the cylindrical outside 30 of the housing portion 32 which surrounds the differential pinions 16 in an annular manner and which accommodates the radially directed spigot fastening holes 22.

As indicated by Fig. 3, the housing portion 32 surrounding the differential pinions 16 has at a distance from the accommodating apertures 22 a planar annular delineating surface 34 situated in a transverse plane perpendicular to the longitudinal direction of the wheel driveshafts 2, 4. The crown wheel 10 has a corresponding planar annular fastening surface which allows close fastening of the crown wheel to the delineating surface 34 of the housing portion 32. The delineating surface 34 accommodates for the purpose four fastening holes 36 for fastening screws.

As also indicated by Fig. 3, the housing portion 32 surrounding the differential pinions 16 is provided with a spherically curved concave inside 38 facing the differential pinions' likewise spherical but convex rear sides 40 facing radially outwards. The spherically curved inside 36 of the housing portion 32 provides supporting reaction surfaces to accommodate the forces which act upon the differential pinions 16 in the longitudinal direction of the differential spigots 18.

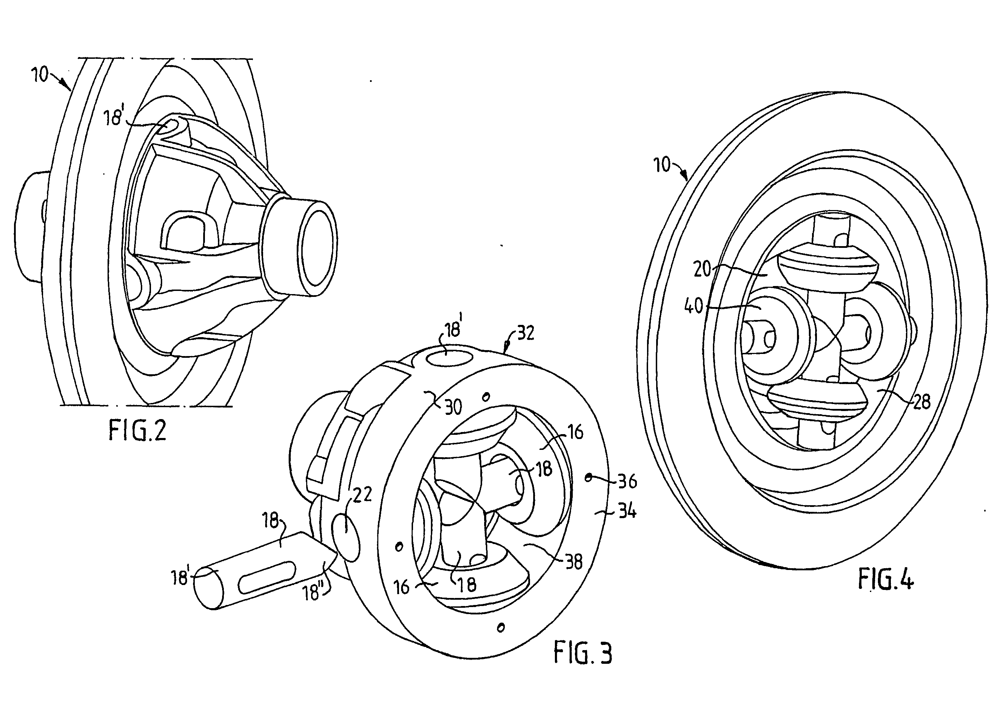

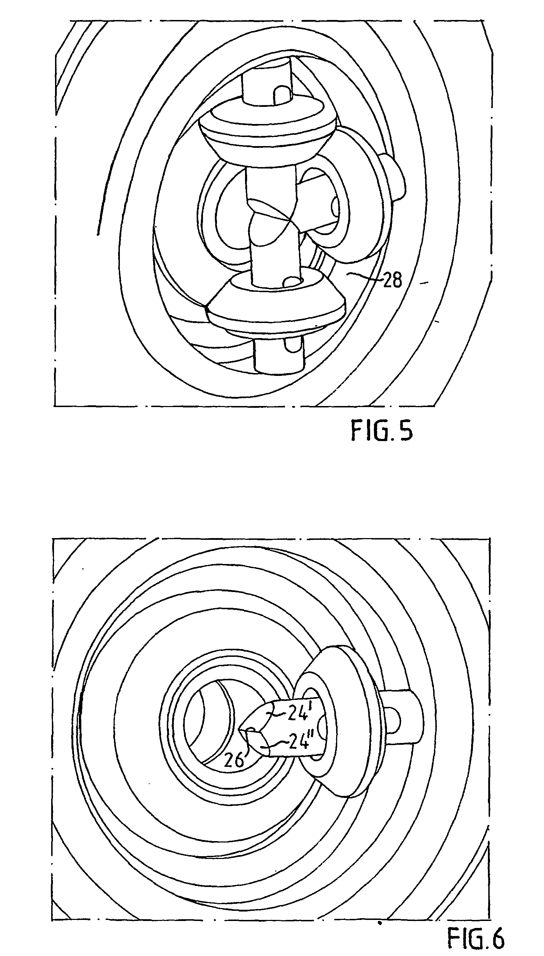

Fig. 7 and Fig. 8 show in more detail the central portions of the housing 12 of the differential gear 6, depicted respectively in the same sectional view as in Fig. 1 and in the sectional plane VIII-VIII in Fig. 7.

## Claims

1. A differential gear in which a driving gearwheel (8), e.g. a pinion, is in driving engagement with a gearwheel (10), e.g. a crown wheel, arranged firmly on the outside of a differential housing (12) containing differential pinions (16),
- said differential pinions (16) are carried by spigots (18) fastened in the differential housing and are in driving engagement with driveshaft pinions (20) fastened to the ends (2',4') of a pair of coaxial wheel driveshafts (2,4), which ends are situated inside the differential housing,
- whereby each differential pinion (16) is carried by a separate differential spigot (18) of its own and each spigot has an outer end (18') accommodated in a positionally fixed manner in the differential housing and an inner end (18") supported and positionally fixed at the centre of the differential housing,
- wherein said differential housing includes a housing portion (32) which surrounds said differential pinions (16) in an annular manner and which has radially directed accommodating apertures (22) for fastening the outer ends (18') of the differential spigots,
- wherein the housing portion (32) surrounding said differential pinions (16) has at a distance from the accommodating apertures (22) an annular delineating surface (34) situated in a transverse plane perpendicular to the longitudinal direction of the wheel driveshafts (2,4), and
- wherein the gearwheel which takes the form of a crown wheel (10) has a fastening surface applied to the delineating surface (34),
- whereby the differential housing is formed by fitting together the crown wheel and the housing portion,
**characterised in that**
- the inner ends (18") of the differential spigots (18) are wedge-shaped with a 90 ° leading edge angle between the leading edge surfaces (24',24") of the wedge tip (26),
- the wedge-shaped inner ends (18") of the spigots are closely in way of one another so that their parallel wedge tips (26) coincide along a line parallel with the wheel driveshafts (2,4).

2. Differential gear according to claim 1, **characterised in that** the differential housing (12) contains four differential pinions (16) and the separate spigots (18) are fitted in a common transverse plane to the differential housing and are mutually aligned to form a right-angled cross.

3. Differential gear according to claim 2, **characterised in that** the differential housing (12) takes the form of an undivided housing unit with no dividing plane in the region of the transverse plane in which the spigots (18) are fitted.

4. Differential gear according to anyone of the preceding claims, **characterised in that** the outer ends (18') of the differential spigots (18) bear against an annular contact surface (28) on the crown wheel (10) so as to be held in position fixing engagement with one another at their inner ends (18').

5. Differential gear according to claim 1, **characterised in that** the housing portion (32) surrounding the differential pinions has a spherically curved inside (38) facing the rear sides (40), which face radially outwards, of the differential pinions (16) in order to provide supporting reaction surfaces to absorb the forces acting upon the differential pinions (16) in the longitudinal direction of the spigots (18).

## Patentansprüche

1. Ausgleichsgetriebe, in dem ein Antriebszahnrad (8), beispielsweise ein Kegelrad, in antriebsmäßigem Eingriff mit einem Zahnrad (10), beispielsweise einem Tellerrad, steht, das fest an der Außenseite eines Ausgleichsgehäuses (12) angeordnet ist, welches Ausgleichskegelräder (16) enthält,
- wobei die Ausgleichskegelräder (16) durch Zapfen (18) getragen werden, die in dem Ausgleichsgehäuse befestigt sind, und in antriebsmäßigem Eingriff mit Achswellenrädern (20) stehen, die an den Enden (2', 4') eines Paares koaxialer Radantriebsachsen (2, 4) befestigt sind, wobei die Enden innerhalb des Ausgleichsgehäuses angeordnet sind,
- wobei jedes Ausgleichskegelrad (16) durch einen separaten Ausgleichszapfen (18) für sich getragen wird und wobei jeder Zapfen ein äußeres Ende (18') aufweist, das in einer positionsmäßig fixierten Art und Weise in dem Ausgleichsgehäuse aufgenommen ist, und ein inneres Ende (18") aufweist, das im Bereich des Zentrums des Ausgleichsgehäuses gelagert und positionsmäßig fixiert ist,
- wobei das Ausgleichsgehäuse einen Gehäuseteil (32) aufweist, der die Ausgleichskegelräder (16) in einer ringförmigen Art und Weise umgibt und der radial gerichtete Aufnahmeöffnungen (22) zur Befestigung der äußeren Enden (18') der Ausgleichszapfen aufweist,
- wobei der die Ausgleichszapfen (16) umgebene Gehäuseteil (32) in einem Abstand von den Aufnahmeöffnungen (22) eine ringförmige Grenzfläche (34) aufweist, die in einer querverlaufenden Ebene senkrecht zu der Längsrichtung der Radantriebsachsen (2, 4) angeordnet ist, und
- wobei das Zahnrad, das die Form eines Tellerrads (10) einnimmt, eine Befestigungsfläche aufweist, die an der Grenzfläche (34) anliegt,
- wobei das Ausgleichsgehäuse durch Zusammensetzen des Tellerrads und des Gehäuseteils gebildet wird,
**dadurch gekennzeichnet, dass**
- die inneren Enden (18") der Ausgleichszapfen (18) keilförmig mit einem Spitzenwinkel von 90° zwischen den Spitzenflächen (24', 24") der Keilspitze (26) ausgebildet sind,
- wobei die keilförmigen inneren Enden (18") der Zapfen nahe zueinander angeordnet sind, so dass ihre parallelen Keilspitzen (26) entlang einer Linie zusammenfallen, die parallel zu den Radantriebsachsen (2, 4) verläuft.

2. Ausgleichsgetriebe nach Anspruch 1, **dadurch gekennzeichnet, dass** das Ausgleichsgehäuse (12) vier Ausgleichskegelräder (16) aufweist und dass die separaten Zapfen (18) in einer gemeinsamen querverlaufenden Ebene in das Ausgleichsgehäuse eingesetzt und zueinander ausgerichtet sind, um ein rechtwinkliges Kreuz zu bilden.

3. Ausgleichsgetriebe nach Anspruch 2, **dadurch gekennzeichnet, dass** das Ausgleichsgehäuse (12) die Form einer ungeteilten Gehäuseeinheit ohne Trennebene im Bereich der querverlaufenden Ebene einnimmt, in der die Zapfen (18) eingesetzt sind.

4. Ausgleichsgetriebe nach einem der vorangehenden Ansprüche, **dadurch gekennzeichnet, dass** die äußeren Enden (18') der Ausgleichszapfen (18) an einer ringförmige Kontaktfläche (28) des Tellerrads (10) lagernd anliegen, so dass sie in positionsmäßig fixierendem Eingriff miteinander an ihren inneren Enden (18") gehalten werden.

5. Ausgleichsgetriebe nach Anspruch 1, **dadurch gekennzeichnet, dass** der Gehäuseabschnitt (32), der die Ausgleichszapfen umgibt, eine sphärisch gekrümmte Innenseite (38) aufweist, die den Rückseiten (40), die nach radial außen weisen, der Ausgleichskegelräder (16) zugewandt sind, um Lagerreaktionsflächen bereitzustellen, um die auf die Ausgleichskegelräder (16) in der Längsrichtung der Zapfen (18) wirkenden Kräfte aufzunehmen.

## Revendications

1. Engrenage de différentiel dans lequel une roue d'engrenage motrice (8), par exemple un pignon, est en prise motrice avec une roue d'engrenage (10), par exemple une couronne dentée, agencée rigidement sur l'extérieur d'un carter de différentiel (12) contenant des satellites de différentiel (16),
- lesdits satellites de différentiel (16) sont portés par des tourillons (18) fixés dans le carter de différentiel et sont en prise motrice avec des pignons d'arbre de transmission (20) fixés sur les extrémités (2', 4') d'une paire d'arbres de roue motrice coaxiaux (2, 4), dont les extrémités sont situées à l'intérieur du carter de différentiel,
- chaque satellite de différentiel (16) étant porté par un tourillon de différentiel séparé (18) qui lui est propre et chaque tourillon ayant une extrémité extérieure (18') reçue de manière fixe en position dans le carter de différentiel et une extrémité intérieure (18") supportée et fixée en position au centre du carter de différentiel,
- dans lequel ledit carter de différentiel comporte une partie de carter (32) qui entoure lesdits satellites de différentiel (16) d'une manière annulaire et qui a des ouvertures de réception (22) dirigées radialement, pour fixer les extrémités extérieures (18') des tourillons de différentiel,
- dans lequel la partie de carter (32) entourant lesdits satellites de différentiel (16) comporte, à une certaine distance des ouvertures de réception (22), une surface de délimitation annulaire (34) située dans un plan transversal perpendiculaire à la direction longitudinale des arbres de roue motrice (2, 4), et
- dans lequel la roue d'engrenage qui prend la forme d'une couronne dentée (10) a une surface de fixation appliquée sur la surface de délimitation (34),
- le carter de différentiel étant formé en assemblant la couronne dentée et la partie de carter,
**caractérisé en ce que**
- les extrémités intérieures (18") des tourillons de différentiel (18) sont en forme de coin avec un angle de bord d'attaque de 90° entre les surfaces de bord d'attaque (24', 24") de la pointe (26) du coin,
- les extrémités intérieures en forme de coin (18") des tourillons se situent sensiblement sur le chemin l'une de l'autre de sorte que leurs pointes de coin parallèles (26) coïncident le long d'une ligne parallèle aux arbres de roue motrice (2, 4).

2. Engrenage de différentiel selon la revendication 1, **caractérisé en ce que** le carter de différentiel (12) contient quatre satellites de différentiel (16) et les tourillons séparés (18) sont agencés dans un plan transversal commun sur le carter de différentiel et sont mutuellement alignés pour former un croisillon à angle droit.

3. Engrenage de différentiel selon la revendication 2, **caractérisé en ce que** le carter de différentiel (12) prend la forme d'une unité de carter non divisée, sans plan de division dans la zone du plan transversal dans lequel les tourillons (18) sont agencés.

4. Engrenage de différentiel selon l'une quelconque des revendications précédentes, **caractérisé en ce que** les extrémités extérieures (18') des tourillons de différentiel (18) portent contre une surface de contact annulaire (28) sur la couronne dentée (10) afin que les tourillons soient maintenus en prise de blocage de position l'un avec l'autre au niveau de leurs extrémités intérieures (18").

5. Engrenage de différentiel selon la revendication 1, **caractérisé en ce que** la partie de carter (32) entourant les satellites de différentiel a un intérieur incurvé de manière sphérique (38) dirigé vers les faces arrière (40), qui sont dirigées radialement vers l'extérieur, des satellites de différentiel (16), afin de constituer des surfaces de réaction portantes pour absorber les forces agissant sur les satellites de différentiel (16) dans la direction longitudinale des tourillons (18).
